# EUROPEAN PATENT SPECIFICATION

(11) **EP 1 624 025 B1**
(45) Date of publication and mention of the grant of the patent: **18.11.2009**
(21) Application number: 05254891.4
(22) Date of filing: 05.08.2005
(51) Int. Cl.: C08L 69/00, C08K 5/523

(54) **Flame retardant thermoplastic polycarbonate compositions, use and method of manufacture thereof**
Flammwidrige thermoplastische Polycarbonatzusammensetzungen, ihre Anwendung und Herstellungsverfahren
Compositions thermoplastiques ignifugées de polycarbonate, leur utilisation et méthode de fabrication

(30) Priority: 05.08.2004 US 912662
(43) Date of publication of application: 08.02.2006
(73) Proprietor: SABIC Innovative Plastics IP B.V., 4612 PX Bergen op Zoom (NL)
(72) Inventor: Ebeling, Thomas, Evansville Indiana 47711 (US); Marugan, Monica Martinez, 4623 XZ Bergen op Zoom (NL); Qu, Zhaohui, Pudong Shanghai 200122 (CN); Siripurapu, Srinivas, Evansville Indiana 47712 (US)
(74) Representative: Modiano, Micaela Nadia

(56) References cited:
- WO-A-2004/076541
- WO-A-2005/037921
- WO-A-2005/075549
- US-A1- 2003 181 603

## Description

This disclosure relates to thermoplastic polycarbonate compositions, and in particular to flame retardant thermoplastic polycarbonate compositions, methods of manufacture, and use thereof.

Polycarbonates are useful in the manufacture of articles and components for a wide range of applications, from automotive parts to electronic appliances. Because of their broad use, particularly in electronic applications, it is desirable to provide polycarbonates with flame retardancy. Many known flame retardant agents used with polycarbonates contain bromine and/or chlorine. Brominated and/or chlorinated flame retardant agents are less desirable because impurities and/or by-products arising from these agents can corrode the equipment associated with manufacture and use of the polycarbonates. Brominated and/or chlorinated flame retardant agents are also increasingly subject to regulatory restriction.

Nonhalogenated flame retardants have been proposed for polycarbonates, including various fillers, phosphorus-containing compounds, and certain salts. It has been difficult to meet the strictest standards of flame retardancy using the foregoing flame retardants, however, without also using brominated and/or chlorinated flame retardants, particularly in thin samples.

Polysiloxane-polycarbonate copolymers have also been proposed for use as non-brominated and non-chlorinated flame retardants. For example, U.S. Application Publication No. 2003/015226 to Cella discloses a polysiloxane-modified polycarbonate comprising polysiloxane units and polycarbonate units, wherein the polysiloxane segments comprise 1 to 20 polysiloxane units. Use of other polysiloxane-modified polycarbonates are described in U.S. Patent No. 5,380,795 to Gosen, U.S. Patent No. 4,756,701 to Kress et al., U.S. Patent No. 5,488,086 to Umeda et al., and EP 0 692 522B1 to Nodera, et al., for example.

While the foregoing flame retardants are suitable for their intended purposes, there nonetheless remains a continuing desire in the industry for continued improvement in flame retardance. One need is for articles that are not as prone to burn-through, that is, the formation of holes upon the application of a flame. Thin articles in particular present a challenge, since burn-through holes tend to form more quickly. Non-brominated and/or non-chlorinated flame retardants can also adversely affect desirable physical properties of the polycarbonate compositions, particularly impact strength.

There accordingly remains a need in the art for polycarbonate compositions having improved flame retardance without use of brominated and/or chlorinated flame retardants. It would also be advantageous if improved flame retardance could be achieved without substantial degradation of properties such as impact strength.

### BRIEF SUMMARY OF THE INVENTION

The above-described and other deficiencies of the art are met by a thermoplastic composition as defined in claim 1.

In another embodiment, an article comprises the above-described composition.

In still another embodiment, a method of manufacture of an article comprises molding, extruding, or shaping the above-described composition into an article.

### DETAILED DESCRIPTION OF THE INVENTION

Disclosed herein are thermoplastic polycarbonate compositions having improved flame retardance. Without being bound by theory, it is believed that the favorable results obtained herein are obtained by careful balancing of the relative amounts of a polycarbonate as specified below and an impact modifier as specified below, in combination with a polysiloxane-polycarbonate copolymer as specified below and an organic phosphorus-containing flame retardant. The compositions can provide an excellent balance of flame retardance, particularly resistance to burn-through, and favorable physical properties, particularly impact resistance. In another advantageous feature, the melt viscosity of the compositions can be adjusted so as to provide a thin article with improved flame retardance and good physical properties.

As used herein, the terms "polycarbonate" and "polycarbonate resin" means compositions having repeating structural carbonate units of the formula (1): 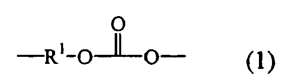 in which at least about 60 percent of the total number of R¹ groups are aromatic organic radicals and the balance thereof are aliphatic, alicyclic, or aromatic radicals. Preferably, each R¹ is an aromatic organic radical and, more preferably, a radical of the formula (2):

―A¹―Y¹―A²― (2)

wherein each of A¹ and A² is a monocyclic divalent aryl radical and Y¹ is a bridging radical having one or two atoms that separate A¹ from A². In an exemplary embodiment, one atom separates A¹ from A². Illustrative non-limiting examples of radicals of this type are -O-, -S-, -S(O)-, -S(O₂)-, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ is preferably a hydrocarbon group or a saturated hydrocarbon group such as methylene, cyclohexylidene, or isopropylidene.

Polycarbonates can be produced by the interfacial reaction of dihydroxy compounds having the formula HO-R¹-OH, which includes dihydroxy compounds of formula (3)

HO―A¹―Y¹―A²―OH (3)

wherein Y¹, A¹ and A² are as described above. Also included are bisphenol compounds of general formula (4): 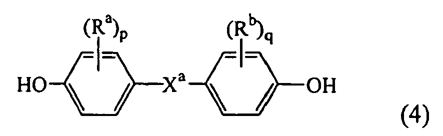 wherein R^{a} and R^{b} each represent a halogen atom or a monovalent hydrocarbon group and may be the same or different; p and q are each independently integers from 0 to 4; and X^{a} represents one of the groups of formula (5): 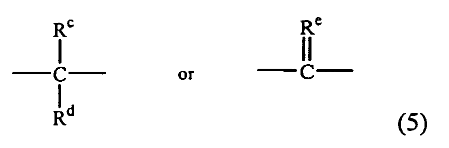 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include the dihydroxy-substituted hydrocarbons disclosed by name or formula (generic or specific) in U.S. Patent 4,217,438. A nonexclusive list of specific examples of suitable dihydroxy compounds includes the following: resorcinol, 4-bromoresorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)- I -naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as mixtures comprising at least one of the foregoing dihydroxy compounds.

A nonexclusive list of specific examples of the types of bisphenol compounds that may be represented by formula (3) includes 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, and 1,1-bis(4-hydroxy-t-butylphenyl) propane. Combinations comprising at least one of the foregoing dihydroxy compounds may also be used.

It is also possible to employ two or more different dihydroxy compounds or a copolymer of a dihydroxy compounds with a glycol or with a hydroxy- or acid-terminated polyester or with a dibasic acid or hydroxy acid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate.

The branched polycarbonates may be prepared by adding a branching agent during polymerization.

These branching agents are well known, and include polyfunctional organic compounds containing at least three functional groups selected from hydroxyl, carboxyl, carboxylic anhydride, haloformyl, and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of about 0.05-2.0 weight percent. Branching agents and procedures for making branched polycarbonates are described in U.S. Patent. Nos. 3,635,895 and 4,001,184, which are incorporated by reference. All types of polycarbonate end groups are contemplated as being useful in the thermoplastic composition.

Preferred polycarbonates are based on bisphenol A, in which each of A¹ and A² is p-phenylene and Y¹ is isopropylidene. Preferably, the average molecular weight of the polycarbonate is about 5,000 to about 100,000, more preferably about 10,000 to about 65,000, and most preferably about 15,000 to about 35,000.

In one embodiment, the polycarbonate has flow properties suitable for the manufacture of thin articles. Melt volume flow rate (often abbreviated MVR) measures the rate of extrusion of a thermoplastics through an orifice at a prescribed temperature and load. Polycarbonates suitable for the formation of flame retardant articles may have an MVR, measured at 260°C/2.16 Kg, of about 4 to about 30 grams per centimeter cubed (g/cm³). Polycarbonates having an MVR under these conditions of about 12 to about 30, specifically about 15 to about 30 g/cm³ may be useful for the manufacture of articles having thin walls. Mixtures of polycarbonates of different flow properties may be used to achieve the overall desired flow property.

Methods for the preparation of polycarbonates by interfacial polymerization are well known. Although the reaction conditions of the preparative processes may vary, several of the preferred processes typically involve dissolving or dispersing the dihydric phenol reactant in aqueous caustic soda or potash, adding the resulting mixture with the siloxane to a suitable water immiscible solvent medium and contacting the reactants with the carbonate precursor, such as phosgene, in the presence of a suitable catalyst such as triethylamine or a phase transfer catalyst, and under controlled pH conditions, e.g., about 8 to about 10. The most commonly used water immiscible solvents include methylene chloride, 1,2-dichloroethane, chlorobenzene, toluene, and the like.

Among the preferred phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈₈ aryloxy group. Suitable phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, CH₃[CH₃(CH₂)₂]₃NX wherein X is Cl⁻, Br⁻ or - a C₁₋₈ alkoxy group or C₆₋₁₈₈ aryloxy group. An effective amount of a phase transfer catalyst may be about 0.1 to about 10 wt.%, about 0.5 to about 2 wt.% based on the weight of bisphenol in the phosgenation mixture.

Alternatively, melt processes may be used. A catalyst may be used to accelerate the rate of polymerization of the dihydroxy reactant(s) with the carbonate precursor. Representative catalysts include but are not limited to tertiary amines such as triethylamine, quaternary phosphonium compounds, quaternary ammonium compounds, and the like.

Alternatively, polycarbonates may be prepared by co-reacting, in a molten state, the dihydroxy reactant(s) and a diaryl carbonate ester, such as diphenyl carbonate, in the presence of a transesterification catalyst in a Banbury mixer, twin screw extruder, or the like to form a uniform dispersion. Volatile monohydric phenol is removed from the molten reactants by distillation and the polymer is isolated as a molten residue.

The polycarbonates can be made in a wide variety of batch, semi-batch or continuous reactors. Such reactors are, for example, stirred tank, agitated column, tube, and recirculating loop reactors. Recovery of the polycarbonate can be achieved by any means known in the art such as through the use of an anti-solvent, steam precipitation or a combination of anti-solvent and steam precipitation.

The polysiloxane-polycarbonate copolymers comprise polycarbonate blocks and polydiorganosiloxane blocks. The polycarbonate blocks comprise repeating structural units of formula (1) as described above, and preferably wherein R¹ is of formula (2) as described above. These units may be derived from reaction of dihydroxy compounds of formula (3) as described above. In one embodiment, the dihydroxy compound is bisphenol A, in which each of A¹ and A² is p-phenylene and Y¹ is isopropylidene.

The polydiorganosiloxane blocks comprise repeating structural units of formula (6): 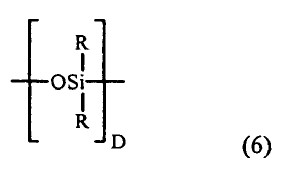 wherein each occurrence of R is same or different, and is a C₁₋₁₃ monovalent organic radical. For example, R may be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups may be used in the same copolymer.

D in formula (6) is selected so as to provide an effective level of flame retardance to the thermoplastic composition. The value of D will therefore vary depending on the type and relative amount of each component in the thermoplastic composition, including the type and amount of polycarbonate, impact modifier, polysiloxane-polycarbonate copolymer, and other flame retardants. Suitable values for D may be determined by one of ordinary skill in the art without undue experimentation using the guidelines taught herein. Generally, D has an average value of 2 to about 1000, specifically about 10 to about 100, more specifically about 25 to about 75. In one embodiment, D has an average value of about 40 to about 60, and in still another embodiment, D has an average value of about 50. Where D is of a lower value, e.g., less than about 40, it may be necessary to use a relatively larger amount of the polysiloxane-polycarbonate copolymer. Conversely, where D is of a higher value, e.g., greater than about 40, it may be necessary to use a relatively smaller amount of the polysiloxane-polycarbonate copolymer.

In one embodiment the polydiorganosiloxane blocks comprise repeating structural units of formula (7) 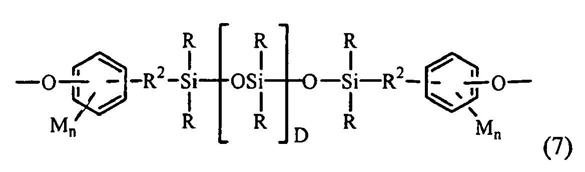 wherein R and D are as defined above.

R² in formula (7) is a divalent C₂-C₈ aliphatic group. Each M in formula (7) may be the same or different, and may be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, R² is a divalent C₁-C₃ aliphatic group, and R is methyl.

These units may be derived from the corresponding dihydroxy polydiorganosiloxane (8): 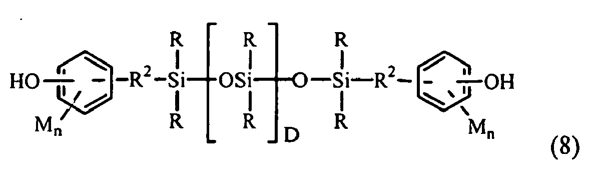 wherein R, D, M, R², and n are as described above.

Such dihydroxy polysiloxanes can be made by effecting a platinum catalyzed addition between a siloxane hydride of the formula (10), 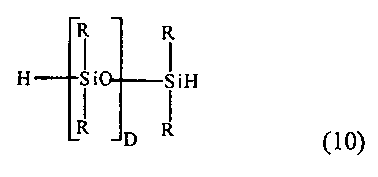 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Mixtures comprising at least one of the foregoing may also be used.

The polysiloxane-polycarbonate copolymer may be manufactured by reaction of dihydroxy polysiloxane (8) with a carbonate source and a dihydroxy aromatic compound of formula (3), optionally in the presence of a phase transfer catalyst as described above. Suitable conditions are similar to those useful in forming polycarbonates. Preferably, the copolymers are prepared by phosgenation, at temperatures from below 0°C to about 100°C, preferably about 25°C to about 50°C. Since the reaction is exothermic, the rate of phosgene addition may be used to control the reaction temperature. The amount of phosgene required will generally depend upon the amount of the dihydric reactants. Alternatively, the polysiloxane-polycarbonate copolymers may be prepared by co-reacting in a molten state, the dihydroxy monomers and a diaryl carbonate ester, such as diphenyl carbonate, in the presence of a transesterification catalyst as described above.

In the production of the polysiloxane-polycarbonate copolymer, the amount of dihydroxy polydiorganosiloxane is selected so as to provide an effective level of flame retardance to the thermoplastic composition. The amount of dihydroxy polydiorganosiloxane will therefore vary depending on desired level of flame retardancy, the value of D, and the type and relative amount of each component in the thermoplastic composition, including the type and amount of polycarbonate, type and amount of impact modifier, type and amount of polysiloxane-polycarbonate copolymer, and type and amount of other flame retardants. Suitable amounts of dihydroxy polydiorganosiloxane can be determined by one of ordinary skill in the art without undue experimentation using the guidelines taught herein. Typically, the amount of dihydroxy polydiorganosiloxane is selected so as to produce a copolymer comprising 8 to 30 wt.% of polydimethylsiloxane, or an equivalent molar amount of another polydiorganosiloxane. When less than about 8 wt.% of polydimethylsiloxane units is present, adequate flame retardance is not achieved, even if higher amounts of the copolymer are present in the composition. The amount of dihydroxy polydiorganosiloxane may further be selected so as to produce a copolymer comprising 15 to 30 wt.% of polydimethylsiloxane, or an equivalent molar amount of another polydiorganosiloxane. The amount of dimethylsiloxane units in the polysiloxane-polycarbonate copolymer may be determined by those of ordinary skill in the art using known methods. For example, the weight percent of dimethylsiloxane units in a compound of formula (8) may be determined by comparison of the integrated intensity of the aromatic protons to the protons on the siloxane chains in the ¹H NMR spectra of a homogenous sample dissolved in CDCl₃ (without tetramethylsilane).

The polysiloxane-polycarbonate copolymers have a weight-average molecular weight (Mw, measured, for example, by gel permeation chromatography, ultra-centrifugation, or light scattering) of about 10,000 to about 200,000, preferably about 20,000 to about 100,000.

The polycarbonate composition further includes an impact modifier composition comprising a particular combination of impact modifiers to increase its impact resistance. The impact modifiers are an elastomer-modified graft copolymers comprising (i) an elastomeric (i.e., rubbery) polymer substrate having a Tg below 0°C, more specifically about -40° to -80°C, and (ii) a rigid polymeric superstrate grafted to the elastomeric polymer substrate. As is known, elastomer-modified graft copolymers may be prepared by first providing an elastomeric polymeric backbone. At least one grafting monomer, and preferably two, are then polymerized in the presence of the polymer backbone to obtain the graft copolymer.

Depending on the amount of elastomer-modified polymer present, a separate matrix or continuous phase of ungrafted rigid polymer or copolymer may be simultaneously obtained along with the elastomer-modified graft copolymer. Typically, such impact modifiers comprise about 40 to about 95 wt.% elastomer-modified graft copolymer and about 5 to about 65 wt.% graft (co)polymer, based on the total weight of the impact modifier. In another embodiment, such impact modifiers comprise about 50 to about 85 wt.%, more specifically about 75 to about 85 wt.% rubber-modified graft copolymer, together with about 15 to about 50 wt.%, more specifically about 15 to about 25 wt.% graft (co)polymer, based on the total weight of the impact modifier. The ungrafted rigid polymers or copolymers may also be separately prepared, for example by radical polymerization, in particular by emulsion, suspension, solution or bulk polymerization, and added to the impact modifier composition or polycarbonate composition. Such ungrafted rigid polymers or copolymers preferably have number average molecular weights of from 20,000 to 200,000.

Suitable materials for use as the elastomeric polymer backbone include, for example, conjugated diene rubbers; copolymers of a conjugated diene with less than about 50 wt.% of a copolymerizable monomer; C₁₋₈ alkyl (meth)acrylate elastomers; olefin rubbers such as ethylene propylene copolymers (EPR) or ethylene-propylene-diene monomers (EPDM); silicone rubbers; elastomeric C₁₋₈ alkyl (meth)acrylates; elastomeric copolymers of C₁₋₈ alkyl (meth)acrylates with butadiene and/or styrene; or combinations comprising at least one of the foregoing elastomers.

Suitable conjugated diene monomers for preparing the elastomer backbone are of formula (8): 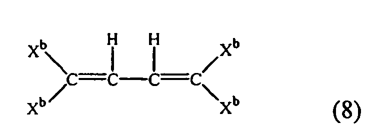 wherein each X^{b} is independently hydrogen, C₁-C₅ alkyl, or the like. Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as mixtures comprising at least one of the foregoing conjugated diene monomers. Specific conjugated diene homopolymers include polybutadiene and polyisoprene.

Copolymers of a conjugated diene rubber may also be used, for example those produced by aqueous radical emulsion polymerization of a conjugated diene and one or more monomers copolymerizable therewith. Monomers that are suitable for copolymerization with the conjugated diene include monovinylaromatic monomers containing condensed aromatic ring structures, such as vinyl naphthalene, vinyl anthracene and the like, and monomers of formula (9): 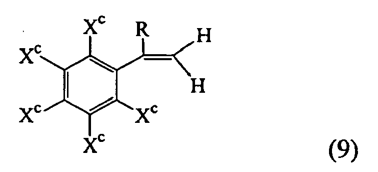 wherein each X^{c} is independently hydrogen, C₁-C₁₂ alkyl, C₃-C₁₂ cycloalkyl, C₆-C₁₂ aryl, C₇-C₁₂ aralkyl, C₇-C₁₂ alkaryl, C₁-C₁₂ alkoxy, C₃-C₁₂ cycloalkoxy, C₆-C₁₂ aryloxy, chloro, bromo, or hydroxy, and R is hydrogen, C₁-C₅ alkyl, bromo, or chloro. Examples of the suitable monovinylaromatic monomers that may be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, combinations comprising at least one of the foregoing compounds, and the like. Styrene and/or alpha-methylstyrene are commonly used as monomers copolymerizable with the conjugated diene monomer. Mixtures of the foregoing monovinyl monomers and monovinylaromatic monomers may also be used.

Other monomers that may be copolymerized with the conjugated diene are monovinylic monomers such as itaconic acid, acrylamide, N-substituted acrylamide or methacrylamide, maleic anhydride, maleimide, N-alkyl, aryl or haloaryl substituted maleimide, glycidyl (meth)acrylates, and monomers of the general formula (10): 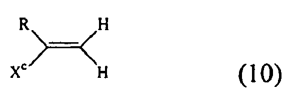 wherein R is as previously defined and X^{c} is cyano, C₁-C₁₂ alkoxycarbonyl, C₁-C₁₂ aryloxycarbonyl, or the like. Examples of monomers of formula (10) include acrylonitrile, ethacrylonitrile, methacrylonitrile, alpha-chloroacrylonitrile, beta-chloroacrylonitrile, alpha-bromoacrylonitrile, methyl acrylate, methyl methacrylate, ethyl acrylate, n-butyl acrylate, n-butyl methacrylate, propyl acrylate, isopropyl acrylate, 2-ethylhexyl acrylate, combinations comprising at least one of the foregoing monomers, and the like. Monomers such as n-butyl acrylate, ethyl acrylate, and 2-ethylhexyl acrylate are commonly used as monomers copolymerizable with the conjugated diene monomer.

Suitable (meth)acrylate rubbers suitable for use as the elastomeric polymer backbone may be cross-linked, particulate emulsion homopolymers or copolymers of C₁₋₈ alkyl (meth)acrylates, in particular C₄₋₆ alkyl acrylates, optionally in admixture with up to 15 wt.% of comonomers such as styrene, methyl methacrylate, butadiene, isoprene, vinyl methyl ether or acrylonitrile, and mixtures comprising at least one of the foregoing comonomers. Optionally, up to 5 wt.% a polyfunctional crosslinking comonomer may be present, for example divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomeric polymer substrate may be in the form of either a block or random copolymer. The particle size of the substrate is not critical, for example, an average particle size of 0.05 to 8 micrometers, more specifically 0.1 to 1.2 micrometers, still more specifically 0.2 to 0.8 micrometers, for emulsion based polymerized rubber lattices or 0.5 to 10 microns, preferably 0.6 to 1.5 microns, for mass polymerized rubber substrates which also have included grafted monomer occlusions. Particle size may be measured by simple light transmission methods or capillary hydrodynamic chromatography (CHDF). The rubber substrate may be a particulate, moderately cross-linked conjugated diene or C₄₋₆ alkyl acrylate rubber, and preferably has a gel content greater than 70%. Also suitable are mixtures of conjugated diene and C₄₋₆ alkyl acrylate rubbers.

In the preparation the elastomeric graft copolymer, the elastomeric polymer backbone may comprise about 40 to about 95 wt.% of the total graft copolymer, more specifically about 50 to about 85 wt.%, and even more specifically about 75 to about 85 wt.% of the elastomer-modified graft copolymer, the remainder being the rigid graft phase.

The elastomer-modified graft polymers may be polymerized by mass, emulsion, suspension, solution or combined processes such as bulk-suspension, emulsion-bulk, bulk-solution or other techniques, using continuous, semibatch, or batch processes.

In one embodiment, the elastomer-modified graft polymer may be obtained by graft polymerization of a mixture comprising a monovinylaromatic monomer and optionally one or more comonomers in the presence of one or more elastomeric polymer substrates. The above-described monovinylaromatic monomers may be used in the rigid graft phase, including styrene, alpha-methyl styrene, halostyrenes such as dibromostyrene, vinyltoluene, vinylxylene, butylstyrene, para-hydroxystyrene, methoxystyrene, or combinations comprising at least one of the foregoing monovinylaromatic monomers. The monovinylaromatic monomers may be used in combination with one or more comonomers, for example the above-described monovinylic monomers and/or monomers of the general formula (10). In one specific embodiment, the monovinylaromatic monomer is styrene or alpha-methyl styrene, and the comonomer is acrylonitrile, ethyl acrylate, and/or methyl methacrylate. In another specific embodiment, the rigid graft phase may be a copolymer of styrene and acrylonitrile, a copolymer of alpha-methylstyrene and acrylonitrile, or a methyl methacrylate homopolymer or copolymer. Specific examples of such elastomer-modified graft copolymers include but are not limited to acrylonitrile-butadiene-styrene (ABS), acrylonitrile-styrene-butyl acrylate (ASA), methyl methacrylate-acrylonitrile-butadiene-styrene (MABS), and methyl methacrylate-butadiene-styrene (MBS), and acrylonitrile-ethylene-propylene-diene-styrene (AES). Acrylonitrile-butadiene-styrene graft copolymers are well known in the art and many are commercially available, including, for example, the high-rubber acrylonitrile-butadiene-styrene resins available from General Electric Company as BLENDEX® grades 131, 336, 338, 360, and 415.

In another embodiment the impact modifier has a core-shell structure wherein the core is an elastomeric polymer substrate and the shell is a rigid thermoplastic polymer that is readily wet by the polycarbonate. The shell may merely physically encapsulate the core, or the shell may be partially or essentially completely grafted to the core. More specifically, the shell comprises the polymerization product of a monovinylaromatic compound and/or a monovinylic monomer or an alkyl (meth)acrylate.

An example of a suitable impact modifier of this type may be prepared by emulsion polymerization and is free of basic materials such as alkali metal salts of C₆₋₃₀ fatty acids, for example sodium stearate, lithium stearate, sodium oleate, potassium oleate, and the like, alkali metal carbonates, amines such as dodecyl dimethyl amine, dodecyl amine, and the like, and ammonium salts of amines. Such materials are commonly used as surfactants in emulsion polymerization, and may catalyze transesterification and/or degradation of polycarbonates. Instead, ionic sulfate, sulfonate, or phosphate surfactants may be used in preparing the impact modifiers, particularly the elastomeric substrate portion of the impact modifiers. Suitable surfactants include, for example, C₁₋₂₂ alkyl or C₇₋₂₅ alkylaryl sulfonates, C₁₋₂₂ alkyl or C₇₋₂₅ alkylaryl sulfates, C₁₋₂₂ alkyl or C₇₋₂₅ alkylaryl phosphates, substituted silicates, and mixtures thereof. A specific surfactant is a C₆₋₁₆, specifically a C₈₋₁₂ alkyl sulfonate. This emulsion polymerization process is described and disclosed in various patents and literature of such companies as Rohm & Haas and General Electric Company. In the practice, any of the above-described impact modifiers may be used providing it is free of the alkali metal salts of fatty acids, alkali metal carbonates, and other basic materials. A specific impact modifier of this type is an MBS impact modifier wherein the butadiene substrate is prepared using above-described sulfonates, sulfates, or phosphates as surfactants. It is also preferred that the impact modifier have a pH of about 3 to about 8, specifically about 4 to about 7.

Another specific type of elastomer-modified impact modifier composition comprises structural units derived from: at least one silicone rubber monomer, a branched acrylate rubber monomer having the formula H₂C=C(R^{d})C(O)OCH₂CH₂R^{e}, wherein R^{d} is hydrogen or a C₁-C₈ linear or branched hydrocarbyl group and R^{e} is a branched C₃-C₁₆ hydrocarbyl group; a first graft link monomer; a polymerizable alkenyl-containing organic material; and a second graft link monomer. The silicone rubber monomer may comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane., octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and the like, alone or in combination. The polymerizable alkenyl-containing organic material may be, for example, a monomer of formula (9) or (10), e.g., styrene, alpha-methylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like, alone or in combination.

The at least one first graft link monomer may be an (acryloxy)alkoxysilane, a (mercaptoalkyl)alkoxysilane, a vinylalkoxysilane, or an allylalkoxysilane, alone or in combination, e.g., (gamma-methacryloxypropyl)(dimethoxy)methylsilane and/or (3-mercaptopropyl)trimethoxysilane. The at least one second graft link monomer is a polyethylenically unsaturated compound having at least one allyl group, such as allyl methacrylate, triallyl cyanurate, or triallyl isocyanurate, alone or in combination.

The silicone-acrylate impact modifier compositions can be prepared by emulsion polymerization, wherein, for example at least one silicone rubber monomer is reacted with at least one first graft link monomer at a temperature from about 30 °C to about 110 °C to form a silicone rubber latex, in the presence of a surfactant such as dodecylbenzenesulfonic acid. Alternatively, a cyclic siloxane such as cyclooctamethyltetrasiloxane and an tetraethoxyorthosilicate may be reacted with a first graft link monomer such as (gamma-methacryloxypropyl)methyldimethoxysilane, to afford silicone rubber having an average particle size from about 100 nanometers to about 2 microns. At least one branched acrylate rubber monomer is then polymerized with the silicone rubber particles, optionally in presence of a cross linking monomer, such as allylmethacrylate in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid may be separated from the aqueous phase through coagulation (by treatment with a coagulant) and dried to a fine powder to produce the silicone-acrylate rubber impact modifier composition. This method can be generally used for producing the silicone-acrylate impact modifier having a particle size from about 100 nanometers to about two micrometers.

The thermoplastic composition may further comprise other thermoplastic polymers, for example the rigid polymers as described above without the elastomer modification, and/or the elastomers as described above without the rigid polymeric grafts. Suitable rigid thermoplastic polymers generally have a Tg greater than about 0°C, preferably greater than about 20°C, and include, for example, polymers derived from monovinylaromatic monomers containing condensed aromatic ring structures, such as vinyl naphthalene, vinyl anthracene and the like, or monomers of formula (9), for example styrene and alpha-methyl styrene; monovinylic monomers such as itaconic acid, acrylamide, N-substituted acrylamide or methacrylamide, maleic anhydride, maleimide, N-alkyl, aryl or haloaryl substituted maleimide, glycidyl (meth)acrylates; and monomers of the general formula (10), for example acrylonitrile, methyl acrylate and methyl methacrylate; and copolymers of the foregoing, for example styrene-acrylonitrile (SAN), methyl methacrylate-acrylonitrile-styrene, and methyl methacrylate-styrene. These additional thermoplastic polymers may be present in amounts of up to about 50 wt.%, specifically about 1 to about 35 wt.%, more specifically about 10 to about 25 wt.%.

In addition to the foregoing components, the polycarbonate compositions further comprise a phosphorus containing flame retardant, for example an organic phosphates and/or an organic compound containing phosphorus-nitrogen bonds.

One type of exemplary organic phosphate is an aromatic phosphate of the formula (GO)₃P=O, wherein each G is independently an alkyl, cycloalkyl, aryl, alkaryl, or aralkyl group, provided that at least one G is an aromatic group. Two of the G groups may be joined together to provide a cyclic group, for example, diphenyl pentaerythritol diphosphate, which is described by Axelrod in U.S. Pat. No. 4,154,775. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 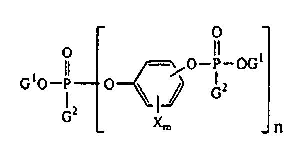 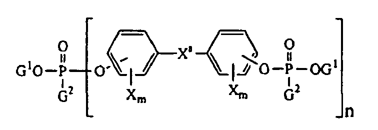 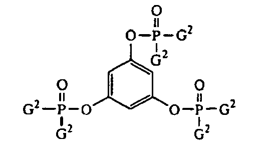 wherein each G¹ is independently a hydrocarbon having 1 to about 30 carbon atoms; each G² is independently a hydrocarbon or hydrocarbonoxy having 1 to about 30 carbon atoms; each X is independently a bromine or chlorine; m 0 to 4, and n is 1 to about 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A (, respectively, their oligomeric and polymeric counterparts, and the like. Methods for the preparation of the aforementioned di- or polyfunctional aromatic compounds are described in British Patent No. 2,043,083.

Exemplary suitable flame retardant compounds containing phosphorus-nitrogen bonds include phosphonitrilic chloride, phosphorus ester amides, phosphoric acid amides, phosphonic acid amides, phosphinic acid amides, tris(aziridinyl) phosphine oxide. The organic phosphorus-containing flame retardants are generally present in amounts of 0.5 to 20 parts by weight, based on 100 parts by weight of the total composition, exclusive of any filler.

The thermoplastic composition may be essentially free of chlorine and bromine, particularly chlorine and bromine flame retardants. "Essentially free of chlorine and bromine" as used herein refers to materials produced without the intentional addition of chlorine, bromine, and/or chlorine or bromine containing materials. It is understood however that in facilities that process multiple products a certain amount of cross contamination can occur resulting in bromine and/or chlorine levels typically on the parts per million by weight scale. With this understanding it can be readily appreciated that essentially free of bromine and chlorine may be defined as having a bromine and/or chlorine content of less than or equal to about 100 parts per million by weight (ppm), less than or equal to about 75 ppm, or less than or equal to about 50 ppm. When this definition is applied to the fire retardant it is based on the total weight of the fire retardant. When this definition is applied to the thermoplastic composition it is based on the total weight of polycarbonate, impact modifier and fire retardant.

Optionally, inorganic flame retardants may also be used, for example sulfonate salts such as potassium perfluorobutane sulfonate (Rimar salt) and potassium diphenylsulfone sulfonate; salts formed by reacting for example an alkali metal or alkaline earth metal (preferably lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, BaCO₃, and BaCO₃ or fluoro-anion complex such as Li₃AlF₆, BaSiF₆, KBF₄, K₃AlF₆, KAlF₄, K₂SiF₆, and/or Na₃AlF₆ or the like. When present, inorganic flame retardant salts are generally present in amounts of about 0.01 to about 1.0 parts by weight, more specifically about 0.05 to about 0.5 parts by weight, based on 100 parts by weight of polycarbonate resin, impact modifier, polysiloxane-polycarbonate copolymer, and phosphorus-containing flame retardant.

Anti-drip agents are also included in the composition, and include, for example fluoropolymers, such as a fibril forming or non-fibril forming fluoropolymer such as fibril forming polytetrafluoroethylene (PTFE) or non-fibril forming polytetrafluoroethylene, or the like; encapsulated fluoropolymers, i.e., a fluoropolymer encapsulated in a polymer as the anti-drip agent, such as a styrene-acrylonitrile copolymer encapsulated PTFE (TSAN) or the like, or combinations comprising at least one of the foregoing antidrip agents. An encapsulated fluoropolymer may be made by polymerizing the polymer in the presence of the fluoropolymer. TSAN may be made by copolymerizing styrene and acrylonitrile in the presence of an aqueous dispersion of PTFE. TSAN may provide significant advantages over PTFE, in that TSAN may be more readily dispersed in the composition. TSAN may, for example, comprise about 50 wt.% PTFE and about 50 wt.% styrene-acrylonitrile copolymer, based on the total weight of the encapsulated fluoropolymer. The styrene-acrylonitrile copolymer may, for example, be about 75 wt.% styrene and about 25 wt.% acrylonitrile based on the total weight of the copolymer. Alternatively, the fluoropolymer may be pre-blended in some manner with a second polymer, such as for, example, an aromatic polycarbonate resin or a styrene-acrylonitrile resin as in, for example, U.S. Patent Nos. 5,521,230 and 4,579,906 to form an agglomerated material for use as an anti-drip agent. Either method may be used to produce an encapsulated fluoropolymer. Antidrip agents are generally used in amounts of 0.1 to 1.4 parts by weight, based on 100 parts by weight of the total composition, exclusive of any filler.

In addition to the polycarbonate resin, the polycarbonate composition may include various additives ordinarily incorporated in resin compositions of this type. Mixtures of additives may be used. Such additives may be mixed at a suitable time during the mixing of the components for forming the composition.

Suitable fillers or reinforcing agents include, for example, TiO₂; fibers, such as asbestos, carbon fibers, or the like; silicates and silica powders, such as aluminum silicate (mullite), synthetic calcium silicate, zirconium silicate, fused silica, crystalline silica graphite, natural silica sand, or the like; boron powders such as boron-nitride powder, boron-silicate powders, or the like; alumina; magnesium oxide (magnesia); calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres),or the like; kaolin, including hard kaolin, soft kaolin, calcined kaolin, kaolin comprising various coatings known in the art to facilitate compatibility with the polymeric matrix resin, or the like; single crystal fibers or "whiskers" such as silicon carbide, alumina, boron carbide, iron, nickel, copper, or the like; glass fibers, (including continuous and chopped fibers), such as E, A, C, ECR, R, S, D, and NE glasses and quartz, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

The fillers and reinforcing agents may be coated with a layer of metallic material to facilitate conductivity, or surface treated with silanes to improve adhesion and dispersion with the polymeric matrix resin. In addition, the reinforcing fillers may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Fillers are generally used in amounts of about 1 to about 50 parts by weight, based on 100 parts by weight of the total composition.

Suitable heat stabilizers include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers are generally used in amounts of about 0.01 to about 0.5 parts by weight based on 100 parts by weight of the total composition, excluding any filler.

Suitable antioxidants include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants are generally used in amounts of about 0.01 to about 0.5 parts by weight, based on 100 parts by weight of the total composition, excluding any filler.

Suitable light stabilizers include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations comprising at least one of the foregoing light stabilizers. Light stabilizers are generally used in amounts of about 0.1 to about 1.0 parts by weight, based on 100 parts by weight of polycarbonate resin, impact modifier, polysiloxane-polycarbonate copolymer, and phosphorus containing flame retardant.

Suitable plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations comprising at least one of the foregoing plasticizers. Plasticizers are generally used in amounts of about 0.5 to about 3.0 parts by weight, based on 100 parts by weight of the total composition, excluding any filler.

Suitable antistatic agents include, for example, glycerol monostearate, sodium stearyl sulfonate, sodium dodecylbenzenesulfonate or the like, or combinations of the foregoing antistatic agents. In one embodiment, carbon fibers, carbon nanofibers, carbon nanotubes, carbon black, or any combination of the foregoing may be used in a polymeric resin containing chemical antistatic agents to render the composition electrostatically dissipative. Antistatic agents are generally used in amounts of about 0.1 to about 3.0 parts by weight based on 100 parts by weight the total composition, excluding any filler.

Suitable mold releasing agents include for example, stearyl stearate, pentaerythritol tetrastearate, beeswax, montan wax, paraffin wax, or the like, or combinations comprising at least one of the foregoing mold release agents. Mold releasing agents are generally used in amounts of about 0.1 to about 1.0 parts by weight, based on 100 parts by weight of the total composition, excluding any filler.

Suitable UV absorbers include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]- 5-(octyloxy)-phenol (CYASORB 1164); 2,2'-(1,4- phenylene)bis(4H-3,1-benzoxazin-4-one) (CYASORB UV- 3638); 1,3-bis[(2-cyano-3,3-diphenylacryloyl)oxy]-2,2-bis[[(2-cyano-3, 3-diphenylacryloyl)oxy]methyl]propane (UVINUL 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than about 100 nanometers; or the like, or combinations comprising at least one of the foregoing UV absorbers. UV absorbers are generally used in amounts of about 0.01 to about 3.0 parts by weight, based on 100 parts by weight based on 100 parts by weight of polycarbonate resin, impact modifier, polysiloxane-polycarbonate copolymer, and phosphorus containing flame retardant.

Suitable lubricants include for example, fatty acid esters such as alkyl stearyl esters, e.g., methyl stearate or the like; mixtures of methyl stearate and hydrophilic and hydrophobic surfactants comprising polyethylene glycol polymers, polypropylene glycol polymers, and copolymers thereof e.g., methyl stearate and polyethylene-polypropylene glycol copolymers in a suitable solvent; or combinations comprising at least one of the foregoing lubricants. Lubricants are generally used in amounts of about 0.1 to about 5 parts by weight, based on 100 parts by weight of the total composition, excluding any filler.

Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates; sulfates and chromates; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations comprising at least one of the foregoing pigments. Pigments are generally used in amounts of about 1 to about 10 parts by weight, based on 100 parts by weight based on 100 parts by weight of the total composition, excluding any filler.

Suitable dyes include, for example, organic dyes such as coumarin 460 (blue), coumarin 6 (green), nile red or the like; lanthanide complexes; hydrocarbon and substituted hydrocarbon dyes; polycyclic aromatic hydrocarbons; scintillation dyes (preferably oxazoles and oxadiazoles); aryl- or heteroaryl-substituted poly (2-8 olefins); carbocyanine dyes; phthalocyanine dyes and pigments; oxazine dyes; carbostyryl dyes; porphyrin dyes; acridine dyes; anthraquinone dyes; arylmethane dyes; azo dyes; diazonium dyes; nitro dyes; quinone imine dyes; tetrazolium dyes; thiazole dyes; perylene dyes, perinone dyes; bis-benzoxazolylthiophene (BBOT); and xanthene dyes; fluorophores such as anti- stokes shift dyes which absorb in the near infrared wavelength and emit in the visible wavelength, or the like; luminescent dyes such as 5-amino-9-diethyliminobenzo(a)phenoxazonium perchlorate; 7-amino-4-methylcarbostyryl; 7-amino-4-methylcoumarin; 3-(2'-benzimidazolyl)-7-N,N-diethylaminocoumarin; 3-(2'-benzothiazolyl)-7-diethylaminocoumarin; 2-(4-biphenylyl)-5-(4-t-butylphenyl)-1,3,4-oxadiazole; 2-(4-biphenyl)-6-phenylbenzoxazole-1,3; 2,5-Bis-(4-biphenylyl)-1,3,4-oxadiazole; 2,5-bis-(4-biphenylyl)-oxazole; 4,4'-bis-(2-butyloctyloxy)-p-quaterphenyl; p-bis(o-methylstyryl)-benzene; 5,9-diaminobenzo(a)phenoxazonium perchlorate; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-diethylamino-4-methylcoumarin; 7-diethylamino-4-trifluoromethylcoumarin; 2,2'-dimethyl-p-quaterphenyl; 2,2-dimethyl-p-terphenyl; 7-ethylamino-6-methyl-4-trifluoromethylcoumarin; 7-ethylamino-4-trifluoromethylcoumarin; nile red; rhodamine 700; oxazine 750; rhodamine 800; IR 125; IR 144; IR 140; IR 132; IR 26; IR5; diphenylhexatriene; diphenylbutadiene; tetraphenylbutadiene; naphthalene; anthracene; 9,10-diphenylanthracene; pyrene; chrysene; rubrene; coronene; phenanthrene or the like, or combinations comprising at least one of the foregoing dyes. Dyes are generally used in amounts of about 0.1 to about 5 parts by weight, based on 100 parts by weight of the total composition, excluding any filler.

Suitable colorants include, for example titanium dioxide, anthraquinones, perylenes, perinones, indanthrones, quinacridones, xanthenes, oxazines, oxazolines, thioxanthenes, indigoids, thioindigoids, naphthalimides, cyanines, xanthenes, methines, lactones, coumarins, bis-benzoxazolylthiophene (BBOT), napthalenetetracarboxylic derivatives, monoazo and disazo pigments, triarylmethanes, aminoketones, bis(styryl)biphenyl derivatives, and the like, as well as combinations comprising at least one of the foregoing colorants. Colorants are generally used in amounts of about 0.1 to about 5 parts by weight, based on 100 parts by weight of the total composition, excluding any filler.

Suitable blowing agents include for example, low boiling halohydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4' oxybis(benzenesulfonylhydrazide), sodium bicarbonate, ammonium carbonate, or the like, or combinations comprising at least one of the foregoing blowing agents. Blowing agents are generally used in amounts of about 1 to about 20 parts by weight, based on 100 parts by weight of the total composition, excluding any filler.

The thermoplastic compositions can be manufactured by methods known in the art, for example in one embodiment, in one manner of proceeding, powdered polycarbonate resin, impact modifier, polydiorganosiloxane-polycarbonate copolymer, and/or other optional components are first blended, optionally with chopped glass strands or other filler in a Henschel high speed mixer. Other low shear processes including but not limited to hand mixing may also accomplish this blending. The blend is then fed into the throat of a twin-screw extruder via a hopper. Alternatively, one or more of the components may be incorporated into the composition by feeding directly into the extruder at the throat and/or downstream through a sidestuffer. Such additives may also be compounded into a masterbatch with a desired polymeric resin and fed into the extruder. The extruder is generally operated at a temperature higher than that necessary to cause the composition to flow. The extrudate is immediately quenched in a water batch and pelletized. The pellets so prepared when cutting the extrudate may be one-fourth inch long or less as desired. Such pellets may be used for subsequent molding, shaping, or forming.

As noted above, it is particularly challenging to achieve excellent flame retardancy while not adversely affecting the desirable physical properties of the compositions, in particular impact strength. It has been found by the inventors hereof that flame retardant compositions having good physical properties and excellent flame retardance in the absence of a brominated or chlorinated flame retardant are obtained by careful balancing of the relative amounts of the above-described polycarbonates, impact modifiers, polysiloxane-polycarbonate copolymers, and organic phosphorus-containing flame retardants. The thermoplastic composition comprises 20 to 90 wt.% of the polycarbonate resin; 1 to 35 wt.% of the impact modifier; 0.5 to 30 wt.% of the polysiloxane-polycarbonate copolymer comprising 8 to 30 wt.% dimethylsiloxane units, or the equivalent molar amount of other diorganosiloxane units; 0.5 to 20 wt.% of an organic phosphorus containing flame retarding agent, each based on the total combined weight of the composition, excluding any filler, and 0,1 to 1,4 parts by weight, based on 100 parts by weight of the thermoplastic composition of an antidrip agent. Amounts outside of these ranges result in compositions that have one or more of decreased flame retardance; decreased notched Izod impact strength at ambient temperature; decreased notched Izod impact strength at low temperatures; and/or decreased heat deflection temperature.

In another embodiment, the thermoplastic composition comprises 40 to 80 wt.% of the polycarbonate resin; 2 to 15 wt.% of the impact modifier; 1.5 to 30 wt.% of the polysiloxane-polycarbonate copolymer comprising 8 to 30 wt.% dimethylsiloxane units, or the equivalent molar amount of other diorganosiloxane units, 1 to 15 wt.% of an organic phosphorus containing flame retarding agent, each based on the total combined weight of the composition, excluding any filler, and 0,1 to 1,4 parts by weight, based on 100 parts by weight of the thermoplastic composition of an antidrip agent. These amounts provide optimal flame retardance, together with optimal notched Izod impact strength at ambient temperature; optimal notched Izod impact strength at low temperature; and/or optimal heat deflection temperature. Relative amounts of each component and their respective composition may be determined by methods known to those of ordinary skill in the art, for example, proton nuclear magnetic resonance spectroscopy (¹H NMR), ¹³C NMR, X-ray fluorescence, high resolution mass spectroscopy, Fourier transform infrared spectroscopy, gas chromatography-mass spectroscopy, and the like.

In one embodiment, the improved flame retardancy of the thermoplastic compositions is reflected in a longer time to through-hole (TTH). It has been found that a useful measure of flame retardancy is the length of time required to burn a hole through a sample upon the repeated application of a flame. Thin samples often have a much shorter time to through-hole, and thus represent a particular challenge to achieving excellent flame retardancy. The above-described compositions have longer through-hole times, and are thus more flame retardant than prior art compositions. In a test where a 5-inch (127 mm) flame with an inner blue cone of 1.58 inches (40 mm) is applied to a plaque for five seconds, removed for five seconds, applied for five seconds, and so on until a through-hole appears, a 3-mm (± 10%) plaque has a TTH of about 30 to about 125 seconds, specifically greater than about 50 seconds, and more specifically greater than about 55 seconds. In another embodiment, a 2.5-mm (± 10%) plaque has a TTH of about 35 to about 90 seconds, specifically greater than about 50 seconds, more specifically greater than about 55 seconds.

In another embodiment, the thermoplastic compositions are of particular utility in the manufacture flame retardant articles that pass the UL94 vertical burn tests, in particular the UL94 5VA standard, which is more stringent than the UL94 5VB standard. In the UL94 vertical burn test, a flame is applied to a vertically fastened test specimen placed above a cotton wool pad. To achieve a rating of 5VB, burning must stop within 60 seconds after five applications of a flame to a test bar, and there can be no drips that ignite the pad. To achieve a rating of 5VA a sample must pass 5VB, and in addition flat plaque specimens may not have a burn-through, i.e., cannot form a hole. The above-described compositions can meet the UL94 5VB standard and/or the UL94 5VA standard.

Thin articles present a particular challenge in the UL 94 tests, because compositions suitable for the manufacture of thin articles tend to have a higher flow. Thus, thermoplastic compositions suitable for the manufacture of a variety of articles will generally have a melt volume rate (MVR) of about 4 to about 30 g/10 minutes measured at 260°C/2.16 kg in accordance with ASTM D1238. Within this range, for thin wall applications, the MVR may be adjusted to greater than about 8, preferably greater than about 10, more preferably greater than about 13 g/10 minutes, measured at 260°C/2.16 kg in accordance with ASTM D1238.

Melt viscosity can provide an alternative indication flow. Thermoplastic compositions as described herein suitable for the manufacture of thin articles may have a melt viscosity at 260°C/1500 sec⁻¹ of about 50 to about 500 Pascal-second, measured in accordance with ISO 11443.

Flame retardance of the samples is excellent. It has been found that in one embodiment, a sample having a thickness of 2.25 to 2.90 mm (± 10%) passes the UL94 5VB standard. In another embodiment, a sample having a thickness of 2.4 to about 2.75 mm (± 10%) passes the UL94 5VB standard. In another embodiment, a sample having a thickness of 2.40 to about 2.60 mm (± 10%) passes the UL94 5VB standard. In still another embodiment, a sample having a thickness of 2.50 mm (± 10%) passes the UL94 5VB standard.

In test specimens made from compositions suitable for the formation of thin materials, application of the flame in the UL94 vertical burn test often leads to the dripping of flaming polymer material and the ignition of the cotton wool pad mounted below the rod. The thinness of the plaque and the higher flow properties of polycarbonate compositions used to make thin materials also tend to lead to burn-through. An advantage of the present compositions is that in one embodiment, very thin samples, that is, samples having thickness even as low as 0.1 mm (± 10%) may pass the UL94 5VA standard, particularly if factors such sample preparation (for example annealing and/or molding conditions), as well as other factors taught herein are carefully controlled. In another embodiment, a sample having a thickness as low as 0.5 mm (± 10%) may pass the UL94 5VA standard. In still another embodiment, a sample having a thickness as low as 1.0 mm (± 10%) may pass the UL94 5VA standard. In other embodiments, a sample having a thickness as low as 2.0 mm (± 10%) may pass the UL94 5VA standard. In still other embodiments, a sample having a thickness of 2.25 to 2.90 mm (± 10%) passes the UL94 5VA standard. In another embodiment, a sample having a thickness of 2.4 to 2.75 mm (± 10%) passes the UL94 5VA standard. In another embodiment, a sample having a thickness of 2.40 to 2.60 mm (± 10%) passes the UL94 5VA standard. In still another embodiment, a sample having a thickness of about 2.50 mm (± 10%) passes the UL94 5VA standard.

The thermoplastic compositions may further have a heat deflection temperature (HDT) about 65 to about 110°C, specifically about 70 to about 105°C, measured according to ISO 75/Ae at 1.8 MPa using 4 mm (± 3%) thick testing bar.

The thermoplastic compositions may further have a Notched Izod Impact (NII) of about 3 to about 18 ft-lb/inch, or about 3 to about 14 ft-lb/inch, measured at room temperature using 1/8-inch (3.18 mm) (± 3%) bars in accordance with ASTM D256.

The thermoplastic compositions may further have a Notched Izod Impact (NII) of about 6 to about 18 ft-lb/inch, or about 6 to about 14 ft-lb/inch, measured at 10 °C using 1/8-inch (3.18 mm) (± 3%) bars in accordance with ASTM D256.

Shaped, formed, or molded articles comprising the thermoplastic compositions are also provided. The thermoplastic compositions can be molded into useful shaped articles by a variety of means such as injection molding, extrusion, rotational molding, blow molding and thermoforming to form articles such as, for example, computer and business machine housings such as housings for monitors, hand held electronic device housings such as housings for cell phones, electrical connectors, and components of lighting fixtures, ornaments, home appliances, roofs, greenhouses, sun rooms, swimming pool enclosures, and the like. The above-described compositions are of particular utility in the manufacture of articles comprising a minimum wall thickness of as low as 0.1 mm, 0.5 mm, 1.0 mm, or 2.0 mm (each ± 10%). The above-described compositions are also of particular utility in the manufacture of articles comprising a minimum wall thickness of 2.25 to 2.90 mm (each ± 10%), preferably 2.4 to 2.75 mm (each ± 10%), and in another embodiment, 2.40 to 2.60 mm (each ± 10%). Minimum wall thicknesses of 2.25 to 2.50 mm (each ± 10%) may also be manufactured.

The present invention is further illustrated by the following non-limiting examples. The following components were used:

**Table 1**

| Component | Type | Source |
|---|---|---|
| PC-1 | BPA polycarbonate resin made by a melt process with an MVR at 300°C/1.2kg, of 23.5-28.5 g/10 min | GE Plastics |
| PC-2 | BPA polycarbonate resin made by a melt process with an MVR at 300°C/1.2kg, of 5.1-6.9 g/10 min | GE Plastics |
| PC-ST-1 | Polysiloxane-polycarbonate copolymer comprising units derived from BPA and units derived from formula (10), wherein n is 0, R² is propylene, R is methyl, D has an average value of about 50, the copolymer having an absolute weight average molecular weight of about 30000 g/mol, and a dimethylsiloxane content of about 20 wt.% | GE Plastics |
| PC-ST-2 | Polysiloxane-polycarbonate copolymer comprising units derived from BPA and units derived from formula (10), wherein n is 0, R² is propylene, R is methyl, D has an average value of about 50, the copolymer having an absolute weight average molecular weight of about 23,500 g/mol and a dimethylsiloxane content of about 6 wt.% | GE Plastics |
| ABS-1 | High rubber graft emulsion polymerized ABS comprising 9.6-12.6 wt.% acrylonitrile and 37-40 wt.% styrene grafted to 49-51 wt.% polybutadiene with a crosslink density of 43-55% | GE Plastics |
| SAN | Styrene acrylonitrile comprising 23.5-26.5 wt.% acrylonitrile and 73.5-76.5 wt.% styrene | GE Plastics |
| ABS-2 | Bulk polymerized ABS comprising 16% rubber and the balance styrene/acrylonitrile | GE Plastics |
| BPA-DP | Bisphenol A bis(diphenylphosphate) | NcendX P-30 |
| RDP | resorcinol bis(diphenyl phosphate) | |

The components shown in Table 2 (parts by weight), and further including 0.5 wt.% of a mold release agent, 1.0 parts by weight of an anti-drip agent (TSAN obtained from General Electric Plastics Europe, comprising 50 wt.% polystyrene-acrylonitrile and 50 wt.% polytetrafluorethylenes) and .25 wt.% of a combination of an antioxidant and a light stabilizer on a Werner & Pfleiderer co-rotating twin screw extruder (25 millimeter screw) using a melt temperature range of about 260-280°C, and subsequently molded at a temperature of 244°C for impact and heat distortion temperature testing according to ASTM standards 256 and 648 respectively on a Van Dorn 85HT injection molding machine. Bars for flame testing were injection molded at a temperature of 244°C on a Husky injection molding machine. Table 2 shows the UL94 flame performance using the vertical burning (V-0/V-1) procedure. Testing bars were injection molded at a temperature of 271°C. Testing plaques were molded at a temperature of 273°C on a Van Dorn 260 D injection molding machine. Results from the following tests are reported in Table 2 below.

Flammability tests were performed following the procedure of Underwriter's Laboratory Bulletin 94 entitled "Tests for Flammability of Plastic Materials, UL94." According to this procedure, materials may be classified as HB, V0, UL94 V1, V2, 5VA, and/or 5VB on the basis of the test results obtained for five samples. The criteria for each of these flammability classifications are described below.

V0: In a sample placed so that its long axis is 180 degrees to the flame, the average period of flaming and/or smoldering after removing the igniting flame does not exceed five seconds and none of the vertically placed samples produces drips of burning particles that ignite absorbent cotton. Five bar flame out time (FOT) is the sum of the flame out time for five bars, each lit twice for a maximum flame out time of 50 seconds.

V1: In a sample placed so that its long axis is 180 degrees to the flame, the average period of flaming and/or smoldering after removing the igniting flame does not exceed twenty-five seconds and none of the vertically placed samples produces drips of burning particles that ignite absorbent cotton. Five bar flame out time is the sum of the flame out time for five bars, each lit twice for a maximum flame out time of 250 seconds.

V2: In a sample placed so that its long axis is 180 degrees to the flame, the average period of flaming and/or smoldering after removing the igniting flame does not exceed twenty-five seconds, but the vertically placed samples produce drips of burning particles that ignite cotton. Five bar flame out time is the sum of the flame out time for five bars, each lit twice for a maximum flame out time of 250 seconds.

5VB: a flame is applied to a vertically fastened, 5-inch (127 mm) by 0.5-inch (12.7 mm) test bar of a given thickness above a dry, absorbent cotton pad located 12 inches (305 mm) below the bar. The thickness of the test bar is determined by calipers with 0.1 mm accuracy. The flame is a 5-inch (127 mm) flame with an inner blue cone of 1.58 inches (40 mm). The flame is applied to the test bar for 5 seconds so that the tip of the blue cone touches the lower corner of the specimen. The flame is then removed for 5 seconds. Application and removal of the flame is repeated for until the specimen has had five applications of the same flame. After the fifth application of the flame is removed, a timer (T-0) is started and the time that the specimen continues to flame (after-flame time), as well as any time the specimen continues to glow after the after-flame goes out (after-glow time), is measured by stopping T-0 when the after-flame stops, unless there is an after-glow and then T-0 is stopped when the after-glow stops. The combined after-flame and after-glow time must be less than or equal to 60 seconds after five applications of a flame to a test bar, and there may be no drips that ignite the cotton pad. The test is repeated on 5 identical bar specimens. If there is a single specimen of the five does not comply with the time and/or no-drip requirements then a second set of 5 specimens are tested in the same fashion. All of the specimens in the second set of 5 specimens must comply with the requirements in order for material in the given thickness to achieve the 5VB standard.

5VA: In addition to meeting the 5VB standard, a set of three plaques having the same thickness as the bars are tested in a horizontal position with the same flame. No test plaque specimen can exhibit a burn-through hole.

Flame retardance was also analyzed by calculation of the average flame out time, standard deviation of the flame out time, as the total number of drips, and using statistical methods to convert that data to a prediction of the probability of first time pass, or "p(FTP)", that a particular sample formulation would achieve a V0 "pass" rating in the conventional UL94 testing of 5 bars. Preferably p(FTP) will be as close to 1 as possible, for example greater than 0.9 and more preferably greater than 0.95, for maximum flame-retardant performance in UL testing.

Time to through hole (TTH) was determined using the same procedure as described for 5VA, except that the flame as applied for five seconds and removed for five seconds repeatedly until a through-hole was observed. TTH is reported in seconds in the Tables below.

HDT was determined using a 4 mm thick (± 10%) bar per ISO 75/Ae at 1.8 MPa .

MVR was determined at 260°C using a 2.16 kilogram load per ASTM D1238.

NII was determined on one-eighth inch (3.18 mm) bars per ASTM D256 at room temperature (23°C) and at lower temperatures down to -30°C.

Percent ductility was determined on one-eighth inch (3.18 mm) bars at room temperature using the impact energy as well as stress whitening of the fracture surface. Generally, stress whitening can indicate ductile failure mode; conversely, lack of stress whitening can indicate brittle failure mode. Ten bars were tested, and percent ductility is expressed as a percentage of impact bars that exhibited ductile failure mode.

**Table 2**

| **Component** | **Example No.** | | | | | | | | | |
|---|---|---|---|---|---|---|---|---|---|---|
| | 1* | 2* | *3 | 4* | 5 | 6 | 7* | 8* | 9* | 10 |
| PC-1 | 40.00 | 38.75 | 38.75 | 35.00 | 30.00 | 25.00 | 20.00 | - | 39.20 | 29.20 |
| PC-2 | 40.00 | 38.75 | 38.75 | 35.00 | 30.00 | 25.00 | 20.00 | - | 39.20 | 29.20 |
| Copolymer-1 | - | 2.50 | 5.00 | 10.00 | 20.00 | 30.00 | - | - | - | 20.00 |
| Copolymer-2 | - | - | - | - | - | - | 40.00 | 80.00 | - | - |
| ABS-1 | 6.00 | 6.00 | 6.00 | 6.00 | 6.00 | 6.00 | 6.00 | 6.00 | - | - |
| SAN | 4.25 | 4.25 | 4.25 | 4.25 | 4.25 | 4.25 | 4.25 | 4.25 | - | - |
| ABS-2 | - | - | - | - | - | - | - | - | 10.25 | 10.25 |
| BPA-DP | - | - | - | - | - | - | - | - | 9.60 | 9.60 |
| RDP | 8.00 | 8.00 | 8.00 | 8.00 | 8.00 | 8.00 | 8.00 | 8.00 | - | - |
| **Properties** | | | | | | | | | | |
| MVR, cm³/10 min. | 7.58 | 6.89 | 7.11 | 6.65 | 5.65 | 4.90 | 8.21 | 7.72 | 10.21 | 8.08 |
| HDT, °C | 90.9 | 88.8 | 88.4 | 87.9 | 85.7 | 84.2 | 85.8 | 81.2 | 90.0 | 86.7 |
| NII, 25°C, ft- lb/inch | 14.7 | 15.5 | 15.0 | 16.7 | 17.4 | 16.6 | 15.2 | 13.2 | 4.9 | 17.83 |
| Ductility, % | 100 | 100 | 100 | 100 | 100 | 100 | 100 | 100 | 20 | 100 |
| V0 p(FTP) | 0.993 | 1.000 | 1.000 | 0.924 | 0.980 | 0.986 | 0.916 | 1.000 | 1.000 | 0.980 |
| 5V plaque at 3.0 mm | pass | pass | pass | pass | pass | Pass | fail | fail | pass | pass |
| 5V plaque at 2.5 mm | fail | pass | pass | pass | pass | Pass | fail | fail | fail | pass |
| 5V bar at 2.5 mm | pass | fail | fail | fail | pass | Pass | fail | fail | fail | pass |
| UL94 Rating at 2.5 mm | | | | | 5VA | 5VA | | | | 5VA |

| | | | | | | | | | | |
|---|---|---|---|---|---|---|---|---|---|---|
| *Comparison Samples | | | | | | | | | | |

As may be seen from examination of the above data, omitting polysiloxane-polycarbonate copolymer from the composition prevents achieving the UL94 5VA standard in thin samples (Example 1). Examples 2-6, containing a polycarbonate-polysiloxane copolymer as described above, further have improved physical properties, particularly NII and HDT, together with good processability.

Comparison of Examples 2-4 with Examples 5-6 shows that a minimum level of silicon is needed to achieve a rating of 5VA. For the formulations shown in Examples 2-6, that level is between about 10 to about 20 wt.% of PC-ST-1, i.e., between about 1 and 4 wt.% of polydimethylsiloxane units, based on the total weight of the composition. Comparison of Examples 5 and 6 show that increasing the amount of polysiloxane-polycarbonate copolymer continues to provide a composition that meets the 5VA standard, but results in a decrease in HDT.

In addition, as shown by Examples 7 and 8, the amount of silicone is not the sole factor determinative of flame retardance. Examples 7 and 8 are formulated using a polysiloxane-polycarbonate copolymer comprising about 6 wt.% of polydimethylsiloxane units in the copolymer. Use of this copolymer does not achieve a UL94 rating of 5VA in thin samples, even where 40-80 parts by weight of the copolymer is used.

Examples 9 and 10 show that the UL94 5VA standard can also be achieved in compositions containing a bulk-polymerized ABS impact modifier and a different phosphorus-based flame retardant.

The above and other data were used to construct a data repository in the form of a design space containing the experimental data grouped together based on common independent variables in a structured format. The design space is constructed so as to allow use of models, i.e., transfer functions, to create new (i.e., theoretical) formulations and to predict their properties based on the experimental data. The transfer functions generally comprise polynomial models relating the properties to the independent variables such as the relative proportions of ingredients, processing parameters, and raw material quality parameters. In cases where there is a sum total constraint on the percentage or proportion of ingredients, a special polynomial form called a Scheffe polynomial model is generally employed (Cornell, J., EXPERIMENTS WITH MIXTURES, publ. by John Wiley & Sons, NY, 1990). Transfer functions can also be physical, rather than empirical, models. Additionally, transfer functions can be developed not just for the mean value of the property, but also for the standard deviation of the property using techniques such as propagation of error and/or direct calculation of standard deviations via an inner-outer array approach (Myers, R. H. and Montgomery, D. C., RESPONSE SURFACE METHODOLOGY, publ. by John Wiley & Sons, NY, 1995). The values in the following Tables 3-5 were generated using this design space.

In order to determine the optimal concentrations of polycarbonate-polysiloxane copolymer, the above design space was used to provide the following values.

**Table 3**

| **Components** | **Example Number** | | | | | | | | |
|---|---|---|---|---|---|---|---|---|---|
| | 11 | 12 | 13 | 14 | 15 | 16 | 17 | 18 | 19 |
| Polycarbonate | 70.4 | 67.9 | 65.4 | 62.9 | 60.4 | 57.9 | 55.4 | 52.9 | 50.4 |
| Copolymer-1 | 5 | 7.5 | 10 | 12.5 | 15 | 17.5 | 20 | 22.5 | 25 |
| ABS-2 | 15 | 15 | 15 | 15 | 15 | 15 | 15 | 15 | 15 |
| BPA-DP | 9.6 | 9.6 | 9.6 | 9.6 | 9.6 | 9.6 | 9.6 | 9.6 | 9.6 |
| **Properties** | | | | | | | | | |
| MVR, cm³/10 min. | 12.1 | 10.9 | 10.1 | 9.4 | 8.9 | 8.7 | 8.6 | 8.7 | 8.9 |
| HDT, °C | 88.3 | 88.0 | 87.7 | 87.3 | 86.8 | 86.3 | 85.7 | 85.1 | 84.4 |
| NII, 23°C, ft-lb/inch | 13.4 | 15.9 | 18.1 | 19.7 | 20.2 | 20.5 | 19.5 | 17.8 | 15.6 |
| TTH of a 2.5 mm plaque | 65.3 | 64.0 | 62.7 | 61.5 | 60.3 | 59 | 57.8 | 56.5 | 55.2 |

As may be seen from these values, TTH for all samples is acceptable, and decreases slightly with increasing amounts of polysiloxane-polycarbonate copolymer. However, as may also be seen from these values, Notched Izod impact strength at room temperature improves with increasing amounts of polysiloxane-polycarbonate copolymer. The optimal balance of flame retardance and impact strength may therefore be achieved by use of the appropriate amount of the polysiloxane copolymer disclosed herein.

Other data (not shown) has demonstrated that a phosphorus-containing flame retardant is necessary to achieve a rating of V0. The effect of varying the amount of phosphorus-containing flame retardant was modeled as described above, resulting in the values shown in Table 4.

**Table 4.**

| **Component** | **Example No.** | | | |
|---|---|---|---|---|
| | 20 | 21 | 22 | 23 |
| Polycarbonate | 69 | 67 | 63 | 59 |
| Copolymer-1 | 20 | 20 | 20 | 20 |
| ABS-2 | 5 | 5 | 5 | 5 |
| BPA-DP | 6 | 8 | 12 | 16 |
| **Properties** | | | | |
| MVR, cm³/10 min. | 6.26 | 7.44 | 11.38 | 19.41 |
| HDT, °C | 98.94 | 93.70 | 84.04 | 75.38 |
| NII, 23°C, ft-lb/inch | 18.38 | 14.02 | 9.973 | 9.26 |
| TTH of a 2.5 mm plaque | 70.60 | 68.04 | 62.92 | 57.81 |

| | | | | |
|---|---|---|---|---|
| *Comparative examples | | | | |

As may be seen from the above values, TTH of a thin sample deteriorates with increasing amounts of phosphorus containing flame retardant. Other physical properties may also be adversely affected. Suitable amounts of a phosphorus-containing flame retardant will therefore be selected based on the need to achieve a flame retardancy of V0 as well as good plaque flame retardance, in combination with the physical properties required for the particular application.

Optimization of a formulation using sufficient phosphorus-containing flame retardant to achieve a flame retardancy rating of V0 is shown below.

**Table 5.**

| **Components** | **Example Number** | | | | | | | |
|---|---|---|---|---|---|---|---|---|
| | **24*** | **25** | **26** | **27** | **28** | **29** | **30** | **31*** |
| Polycarbonate | 74 | 69 | 64 | 59 | 69 | 64 | 54 | 44 |
| Copolymer-1 | 5 | 10 | 15 | 20 | 25 | 5 | 15 | 25 |
| ABS-2 | 5 | 5 | 5 | 5 | 5 | 15 | 15 | 15 |
| BPA-DP | 16 | 16 | 16 | 16 | 16 | 16 | 16 | 16 |
| **Properties** | | | | | | | | |
| MVR, cm3/10 min. | 26.9 | 22.4 | 20.1 | 19.4 | 20.2 | 28.2 | 20.9 | 20.8 |
| HDT, □C | 77.4 | 77.0 | 76.3 | 75.4 | 74.3 | 75.4 | 73.9 | 71.6 |
| NII, 23°C, ft-lb/inch | 2.3 | 4.4 | 7.0 | 9.3 | 10.3 | 6.3 | 7.9 | 13.4 |
| TTH of a 2.5 mm plaque | 66.0 | 63.3 | 60.5 | 57.8 | 55.1 | 60.0 | 54.5 | 49.0 |

| | | | | | | | | |
|---|---|---|---|---|---|---|---|---|
| *Comparative | | | | | | | | |

As may be seen from the above values, use of low amounts of polysiloxane polycarbonate copolymer and ABS provides compositions having good TTH, but unacceptable impact strength (Example 24). Increasing the amount of polysiloxane polycarbonate copolymer reduces the TTH, but not greatly; it also improves impact strength to acceptable levels. One of skill in the art can readily select a suitable composition from within the ranges of Examples 25-28, for example, depending on the desired combination of TTH and impact strength. Alternatively, as shown in Example 29-30, increasing the amount of impact modifier can be used to improve impact strength without a significant decrease in TTH (compare Examples 24, 26, and 29). Ultimately, however, although higher levels of both polysiloxane polycarbonate copolymer and impact modifier provide good impact strength, TTH will become unacceptably low (Example 31).

The singular forms "a," "an," and "the" include plural referents unless the context clearly dictates otherwise. Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs. The endpoints of all ranges directed to the same property or amount are independently combinable and inclusive of the endpoint. The modifier "about" used in connection with a quantity is inclusive of the stated value, and has the meaning dictated by the context, for example the degree of error associated with measurement of the particular quantity. Where a measurement is followed by the notation "(± 10%)" or "(±3%)", the measurement may vary within the indicated percentage either positivley or negatively. This variance may be manifested in the sample as a whole (e.g., a sample that has a uniform width that is within the indicated percentage of the stated value), or by variation(s) within the sample (e.g., a sample having a variable width, all such variations being within the indicated percentage of the stated value). All references are incorporated herein by reference.

While typical embodiments have been set forth for the purpose of illustration, the foregoing descriptions should not be deemed to be a limitation on the scope of the invention. Accordingly, various modifications, adaptations, and alternatives may occur to one skilled in the art without departing from the spirit and scope of the present invention.

## Claims

1. A thermoplastic composition, consisting essentially of
20 to 90 wt.% of a polycarbonate resin;
1 to 35 wt.% of an impact modifier composition comprising an elastomer-modified graft copolymer comprising (i) an elastomeric polymer substrate having a Tg below 0°C, and (ii) a rigid polymeric superstrate grafted to the elastomeric polymer substrate;
0.5 to 30 wt.% of a polysiloxane-polycarbonate copolymer comprising 8 to 30 wt.% polydimethylsiloxane units or the equivalent molar amount of other diorganosiloxane units; and
0.5 to 20 wt.% of a phosphorus-containing flame retardant, each based on the total combined weight of the thermoplastic composition, exclusive of any filler; and
0.1 to 1.4 parts by weight, based on 100 parts by weight of the thermoplastic composition, exclusive of any filler of an antidrip agent.

2. The composition of claim 1, wherein a sample of the thermoplastic composition having a thickness of 2.5 (± 10%) mm achieves a time to through-hole under UL94 testing conditions of greater than about 50 seconds in the absence of a brominated and/or chlorinated flame retardant.

3. The composition of claim 1, wherein a sample of the thermoplastic composition having a thickness of 3.0 mm (± 10%) achieves a UL94 5VA rating in the absence of a brominated and/or chlorinated flame retardant.

4. The composition of claim 1, wherein a one-eighth inch (3,18 mm) (± 3%) bar comprising the composition has anotched Izod impact strength of at least about 3 ft-lb/inch determined in accordance with ASTM D256 at room temperature.

5. The composition of claim 1, having a heat deflection temperature about 65 to about 110°C, measured in accordance with ISO 75/Ae at 1.8 MPa using 4 mm (± 3%) thick testing bar.

6. The composition of claim 1, having a melt viscosity at 260°C/1500 sec⁻¹ of 50 to 500 Pascal-second, measured in accordance with ISO 11443,

7. The composition of claim 1, wherein the polysiloxane-polycarbonate copolymer comprises
aromatic carbonate units of formula (1): 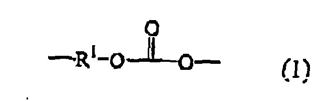 wherein at least about 60 percent of the total numbed of R¹ groups are aromatic organic radicals and the balance thereof are aliphatic, alicyclic, or aromatic radicals; and
polydiorganosiloxane units of formula (7) 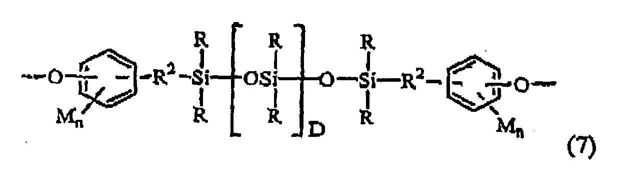 wherein
each R is independently a C₁₋₁₃ monovalent organic radical;
D has an average value of 2 to 1000,
each R² is independently a divalent C₂-C₈ aliphatic group;
each M is independently a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy; and
each n is independently 0; 1, 2, 3, or 4.

8. The composition of claim 1, further comprising a thermoplastic polymer having a Tg of greater than about 20°C, and comprising units derived from a monovinyl aromatic compound, itaconic acid, acrylamide, N-substituted acrylamide methacrylamide, maleic anhydride, maleimide, N-alkyl, aryl or haloaryl substituted maleimide, a glycidyl (meth)acrylate, a monomer of the general formula (10): 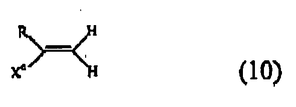 wherein R is hydrogen, C₁-C₅ alkyl, bromo, or chloro and X^{c} is cyano, C₁-C₁₂ alkoxycarbonyl, or C₁-C₁₂ aryloxycarbonyl, or a combination comprising at least one of the foregoing monomers.

9. An article comprising the composition of claim 1.

10. A method for forming an article, comprising
molding, extruding or shaping the composition of claim 1 to form the article,

## Patentansprüche

1. Eine thermoplastische Zusammensetzung, die im Wesentlichen aus Folgendem besteht:
20 bis 90 Gewichtsprozent eines Polycarbonatharzes;
1 bis 35 Gewichtsprozent einer Stoßdämpfer-Zusammensetzung, die ein Elastomer-modifiziertes Pfropfcopolymer umfaßt, welches Folgendes umfasst: (i) ein elastomeres Polymersubstrat mit einer Tg unter 0°C und (ii) ein starres polymeres Substrat, das auf das elastomere Polymersubstrat aufgepfropft ist;
0,5 bis 30 Gewichtsprozent eines Polysiloxan-Polycarbonat-Copolymers, das 8 bis 30 Gewichtsprozent Polydimethylsiloxaneinheiten oder die äquivalente Molmenge anderer Diorganosiloxaneinheiten umfasst, und
0,5 bis 20 Gewichtsprozent eines Phosphor enthaltenden Flammverzögerungsmittels, jeweils basierend auf dem kombinierten Gesamtgewicht der thermoplastischen Zusammensetzung, ohne jeden Füllstoff, und
0,1 bis 1,4 Masseteilen, basierend auf 100 Masseteilen der thermoplastischen Zusammensetzung, ohne jeden Füllstoff, eines Antitropfmittels.

2. Die Zusammensetzung gemäß Anspruch 1, worin eine Probe der thermoplastischen Zusammensetzung, die eine Dicke von 2,5 (±10%)mm hat, unter UL94-Testbedingungen eine Zeit bis zum Durchbrennen von mehr als ungefähr 50 Sekunden in Abwesenheit eines bromierten und/oder chlorierten Flammverzögerungsmittels erreicht.

3. Die Zusammensetzung gemäß Anspruch 1, worin eine Probe der thermoplastischen Zusammensetzung mit einer Dicke von 3,0min(±10%) in Abwesenheit eines bromierten und/oder chlorierten Flammverzögerungsmittels einen UL94 5VA-Wert erreicht.

4. Die Zusammensetzung gemäß Anspruch 1, worin ein Stab von einem Achtel Zoll (3,18 mm) (± 3%), der die Zusammensetzung umfasst, bei Raumtemperatur eine Kerbschlagzähigkeit nach Izod von mindestens ungefähr 3 ft-lb/Zoll nach ASTM D256 hat.

5. Die Zusammensetzung gemäß Anspruch 1, die eine Wärmedurchbiegungstemperatur von ungefähr 65 bis ungefähr 110°C, gemessen nach ISO 75/Ae bei 1,8 MPa bei Verwendung eines 4mm (±3%) dicken Prüfstabs hat.

6. Die Zusammensetzung gemäß Anspruch 1, die bei 260°C/1500sec⁻¹ eine Schmelzviskosität von 50 bis 500 Pascal-Sekunden, gemessen nach ISO 11443, hat.

7. Die Zusammensetzung gemäß Anspruch 1, worin das Polysiloxan-Polycarbonat-Copolymer Folgendes umfasst:
aromatische Carbonateinheiten mit der Formel (1): 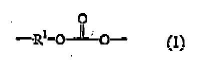 worin mindestens ungefähr 60 Prozent der Gesamtzahl von R¹-Gruppen aromatische organische Radikale sind und der Rest davon aliphatische, alicyclische oder aromatische Radikale sind, und
Polydiorganosiloxaneinheiten mit der Formel (7) 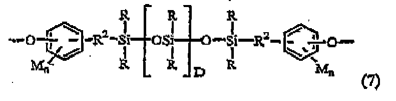 worin
jedes R unabhängig ein einwertige organisches C₂₋₁₃-Radikal ist,
D einen Durchschnittswert von 2 bis 1000 hat,
jedes R² unabhängig eine zweiwertige aliphatische C₂-C₆-Gruppe ist,
jedes M unabhängig ein Halogen, Cyano, Nitro, C₁-C₆-Alkylthio, C₁-C₆-Alkyl, C₁-C₆-Alkoxy, C₂-C₉-Alkenyl, eine C₂-C₈-Alkenyloxygruppe, C₃-C₆-Cycloalkyl, C₃-C₈-Cycloalkoxy, C₆-C₁₀-Aryl, C₆-C₁₀-Aryloxy, C₇-C₁₂-Aralkyl, C₇-C₁₂-Aralkoxy, C₇-C₁₂-Alkaryl oder C₇-C₁₂-Alkaryloxy ist und
jedes n unabhängig 0, 1, 2, 3 oder 4 ist.

8. Die Zusammensetzung gemäß Anspruch 1, die weiter ein thermoplastisches Polymer mit einer Tg von mehr als ungefähr 20°C und Einheiten umfasst, die abgeleitet sind von einer aromatischen Monovinylverbindung, Itaconsäure, Acrylamid, N-substituiertem Acrylamid, Methacrylamid, Maleinsäureanhydrid, Maleimid, N-Alkyl-, Aryl- oder Haloaryl-substituiertem Maleimid, einem Glycidyl(meth)acrylat, einem Monomer mit der allgemeinen Formel (10): 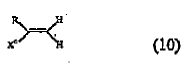 worin R Wasserstoff, C₁-C₅-Alkyl, Brom oder Chlor ist und X^{c} Cyano, C₁-C₁₂-Alkoxycarbonyl oder C₁-C₁₂-Aryloxycarbonyl oder eine Kombination ist, die mindestens eines der oben genannten Monomere umfasst.

9. Ein Artikel, der die Zusammensetzung gemäß Anspruch 1 umfasst.

10. Ein Verfahren zum Formen eines Artikels, das Folgendes umfasst:
Formen, Extrudieren oder Gestalten der Zusammensetzung gemäß Anspruch 1, um den Artikel zu bilden.

## Revendications

1. Composition thermoplastique, composée essentiellement de :
20 à 90 % en poids de résine polycarbonate ;
1 à 35 % en poids d'une composition modificatrice d'impact, comprenant un copolymère greffé modifié par des élastomères comprenant (i) un substrat polymère élastomère ayant une Tg inférieure à 0°C, et (ii) un superstrat polymère rigide greffé sur le substrat polymère élastomère ;
de 0,5 à 30 % en poids d'un copolymère polysyloxane-polycarbonate, comprenant de 8 à 30 % en poids d'unités polydiméthylsiloxane ou la quantité molaire équivalente d'autres unités diorganosiloxane ; et
de 0,5 à 20 % en poids d'un agent ignifuge contenant du phosphore, chacun basé sur le poids total combiné de la composition thermoplastique, exclusive de toute charge ; et
de 0,1 à 1,4 partie en poids, basé sur 100 parties en poids de la composition thermoplastique, exclusive de toute charge, d'un agent anti-égouttement.

2. Composition selon la revendication 1, dans laquelle un échantillon de la composition thermoplastique, ayant une épaisseur de 2,5 (± 10 %) mm, donne, dans des conditions d'essai selon UL94, un temps pour un trou traversant supérieur à à peu près 50 secondes en l'absence d'un agent ignifuge bromé et/ou chloré.

3. Composition selon la revendication 1, dans laquelle un échantillon de la composition thermoplastique, ayant une épaisseur de 3,0 (± 10 %) mm, donne un classement UL94 5VA en l'absence d'un agent ignifuge bromé et/ou chloré.

4. Composition selon la revendication 1, dans laquelle une barre de 3,18 mm (un huitième de pouce) (± 3%), ayant la composition, présente une résistance Izod avec entaille d'au moins à peu près 3 ft-Ib/inch, déterminée selon ASTM D256, à la température ambiante.

5. Composition selon la revendication 1, présentant une température de fléchissement sous charge d'à peu près 65 à à peu près 110°C, mesurée selon ISO 75/Ae . à 1,8 MPa, en utilisant un basse d'essai d'épaisseur 4 mm (± 3 %).

6. Composition selon la revendication 1, présentant une viscosité à l'état fondu, à 260°C/1500 sec⁻¹, de 50 à 500 Pascal-seconde, mesurée selon ISO 11443.

7. Composition selon 1a revendication 1, dans laquelle le copolymère polysyloxane-polycarbonate comprend :
des unités carbonate aromatiques de la formule (1) : 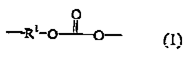 dans laquelle au moins à peu près 60 pourcent du nombre total de groupes R1 sont des radicaux organiques aromatiques et le reste sont des radicaux aliphatiques, alicyclique, ou aromatiques ; et
des unités polydiorganosiloxane de la formule (7) : 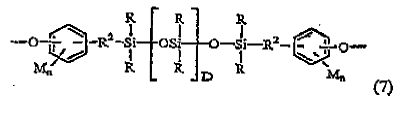 dans laquelle
chaque R est, indépendamment, un radical organique monovalent en C_{1 à 13} ;
D a une valeur moyenne de 2 à 1000,
chaque R² est, indépendamment, un groupe aliphatique en C₂ à C₈ ;
chaque M est, indépendamment, un halogène, cyano, nitro, alkylthio en C₁ à C₈, alkyl en C₁ à C₈, alkoxy en C₂ à C₈, alkényl en C₂ à C₈, groupe alkényloxy en C₂ à C₈, cycloalkyl en C₃ à C₈, cycloalkoxy en C₃ à C₈, aryl en C₆ à C₁₀, aryloxy en C₆ à C₁₀, aralkyl en C₇ à C₁₂, aralkoxy en C₇ à C₁₂, alkaryl en C₇ à C₁₂, ou alkaryloxy en C₇ à C₁₂, et
chaque n est, indépendamment, 0, 1, 2, 3 ou 4.

8. Composition selon la revendication 1, comprenant en outre un polymère thermoplastique ayant une Tg supérieure à environ 20°C, et comprenant des unités dérivées d'un composé aromatique monovinyl, l'acide itaconique, acrylamide, acrylamide méthacrylamide N substitué, l'anhydride maléique, maléimide, N'-alkyl, maleimide substituée aryl ou haloaryl, un glycidyl (méth)acrylate, un monomère de la formule générale (10): 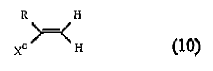 dans laquelle R est l'hydrogène, un alkyl en C₁ à C₅, bromo, ou chloro et X^{c} est cyano, un alkoxycarbonyl en C₁ à C₁₂, ou un aryloxycarbonyl en C₁ à C₁₂, ou une combinaison comprenant au moins l'un des monomères précédents.

9. Article comprenant la composition de la revendication 1.

10. Procédé de formage d'un article, comprenant :
le moulage, l'extrusion ou le profilage de la composition de la revendication 1, pour former l'article.
